# EUROPEAN PATENT APPLICATION

(11) **EP 4 726 863 A1**
(43) Date of publication of application: **15.04.2026**
(21) Application number: 24819412.8
(22) Date of filing: 07.06.2024
(51) Int. Cl.: H01M 14/00

(54) **POWER GENERATION ELEMENT**

(30) Priority: 09.06.2023 JP 2023095866
(71) Applicant: National Institute of Advanced Industrial Science and Technology, Chiyoda-ku Tokyo 100-8921 (JP)
(72) Inventor: KOMAZAKI, Yusuke, Tsukuba-shi, Ibaraki 305-8560 (JP); NOBESHIMA, Taiki, Tsukuba-shi, Ibaraki 305-8560 (JP); HIRAMA, Hirotada, Tsukuba-shi, Ibaraki 305-8560 (JP); WATANABE, Yuichi, Tsukuba-shi, Ibaraki 305-8560 (JP)
(74) Representative: WSL Patentanwälte Partnerschaft mbB
(86) International application number: PCT/JP2024/020852
(87) International publication number: WO 2024/253185

(57) **Abstract**

Provided is a power generating element capable of obtaining a larger electromotive force by using humidity fluctuation in an environment. The power generating element generates power by using a humidity change due to water vapor in the environment. A first chamber shielded from the water vapor in the environment and a second chamber opened to the water vapor in the environment are separated by an ion-permeable membrane, and are each filled with an aqueous electrolytic solution including an aqueous solution of a deliquescent ionic compound. In addition, an electrode is provided in each of the first chamber and the second chamber. Here, the ion-permeable membrane is made of an electrolyte capable of conducting ions that have not been hydrated.

## Description

### Technical Field

The present invention relates to a power generating element that performs power generation or detection of a humidity change by using electromotive force due to humidity fluctuation in an environment.

### Background Art

A humidity fluctuation battery serving as a power generating element is an energy harvesting element that generates power by using a humidity change in the environment, and is operable in a wide environment where humidity fluctuates. Therefore, the humidity fluctuation battery is expected to be used as, for example, a power source for an IoT-related device that may be installed in large numbers in various places.

For example, Patent Literature 1 discloses one structure of such a humidity fluctuation battery. An aqueous solution of a deliquescent ionic compound is separated by an ion-permeable membrane, and an electrode is inserted into each side of the separated aqueous solution. Then, one side of the ion-permeable membrane is shielded from the outside air and sealed, and the other side is connected to the outside air. At this time, a humidity change in the outside air may cause a difference in ion concentration derived from the ionic compound in the aqueous solution between both sides of the ion-permeable membrane, and thus electromotive force is generated between the electrodes.

### Citation List

### Patent Literature

Patent Literature 1: JP 2022-99092 A

### Summary of Invention

### Technical Problem

In generally used batteries, self-discharge leads to a decrease in voltage over time, and thus, reduction of self-discharge will achieve long-term operation stability. Normally, the decrease in voltage occurs on a timescale of about several months to several years. Meanwhile, in the humidity fluctuation battery, self-discharge acts in such a way as to immediately reduce a difference in concentration of an ionic compound in an aqueous solution between both sides of an ion-permeable membrane, caused by a humidity change. That is, since occurrence of a concentration difference due to a humidity change proceeds simultaneously with disappearance of the concentration difference due to self-discharge, voltage to be obtained is not so high. Therefore, it is required to obtain practically sufficient power for use in a power source of devices such as an IoT-related device. That is, it is important to obtain a large electromotive force with a slight humidity fluctuation in the environment.

The present invention has been made in view of the above circumstances, and an object of the present invention is to provide a power generating element capable of obtaining a larger electromotive force in performing power generation or detection of a humidity change by using electromotive force due to humidity fluctuation in the environment.

### Solution to Problem

As a result of intensive studies on the lowness of electromotive force in practical use of an existing power generating element, the inventors of the present application have found that the lowness of electromotive force is caused by migration of moisture in an ion-permeable membrane, and have arrived at the present invention.

That is, the present invention is a power generating element for generating power by using a humidity change due to water vapor in an environment, the power generating element including: a first chamber shielded from the water vapor in the environment; and a second chamber opened to the water vapor in the environment, wherein the first chamber and the second chamber are separated by an ion-permeable membrane, each of the first chamber and the second chamber is filled with an aqueous electrolytic solution including an aqueous solution of a deliquescent ionic compound, an electrode is provided in each of the first chamber and the second chamber, and the ion-permeable membrane is made of an electrolyte capable of conducting ions that have not been hydrated.

According to such characteristics, migration of moisture in the ion-permeable membrane can be suppressed, and it is thus possible for the power generating element to generate a larger electromotive force than before by using humidity in the environment, that is, fluctuation of moisture.

In the invention described above, the electrolyte may include water-resistant ion-conducting glass ceramic. Furthermore, the water-resistant ion-conducting glass ceramic may include a LATP solid electrolyte having a LISICON-type crystal structure. According to such characteristics, it is possible to make the ion-permeable membrane chemically more stable, and this enables the power generating element to stably operate over a long period of time by using humidity fluctuation in the environment.

In the above-described invention, periphery of the ion-permeable membrane may be sandwiched between supports which are each a composite containing the electrolyte and made of a foamed material. In addition, the foamed material may include foamed fluororubber. According to such characteristics, it is possible to make the ion-permeable membrane physically stable, and this enables the power generating element to stably operate over a long period of time by using humidity fluctuation in the environment.

In the above-described invention, the second chamber may be shielded from the environment by a moisture-permeable membrane that transmits water vapor, and an area of the moisture-permeable membrane being exposed to the environment may be larger than an area of the ion-permeable membrane separating the first chamber and the second chamber. According to such characteristics, it is possible to improve the speed of absorption of water vapor from the environment and release of water vapor into the environment, and this enables generation of electromotive force with a fast response to a humidity change of the environment.

### Brief Description of Drawings

[Fig. 1] Fig. 1 is a cross-sectional view of a humidity fluctuation battery according to the present invention.
[Fig. 2] Fig. 2 is an exploded perspective view of a humidity fluctuation battery used in a production test.
[Fig. 3A] Fig. 3A is a cross-sectional view of the above-described humidity fluctuation battery, which illustrates a production process thereof.
[Fig. 3B] Fig. 3B is a cross-sectional view of the above-described humidity fluctuation battery, which illustrates the production process thereof.
[Fig. 3C] Fig. 3C is a cross-sectional view of the above-described humidity fluctuation battery, which illustrates the production process thereof.
[Fig. 3D] Fig. 3D is a cross-sectional view of the above-described humidity fluctuation battery, which illustrates the production process thereof.
[Fig. 3E] Fig. 3E is a cross-sectional view of the above-described humidity fluctuation battery, which illustrates the production process thereof.
[Fig. 4] Fig. 4 is a graph of voltage generated when humidity fluctuation was applied to the humidity fluctuation battery.

### Description of Embodiments

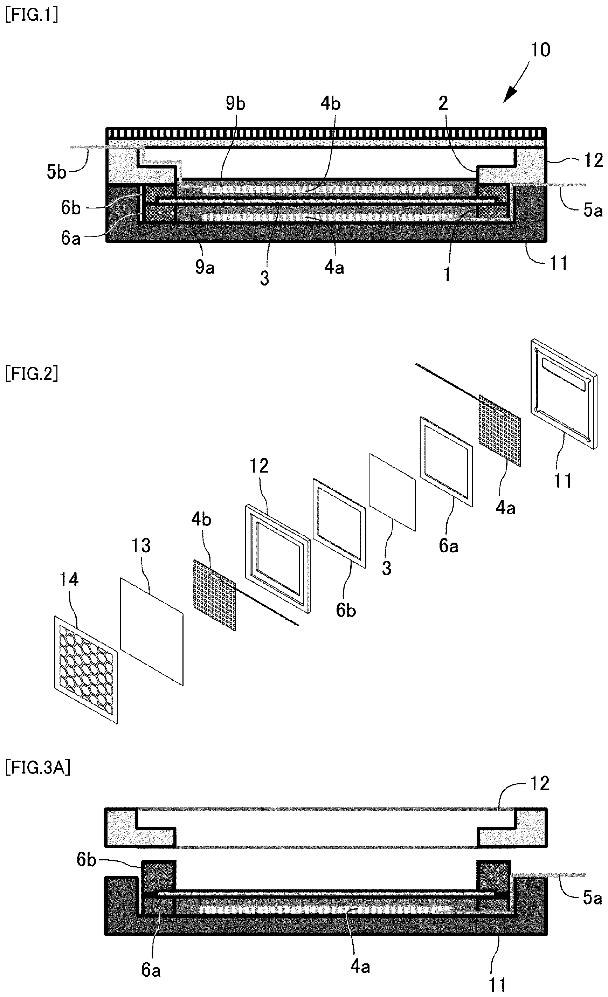

Hereinafter, a power generating element according to one embodiment of the present invention will be described with reference to Fig. 1.

As illustrated in Fig. 1, a humidity fluctuation battery 10 serving as a power generating element includes a closed tank 1 serving as a first chamber filled with a water type electrolytic solution (aqueous electrolytic solution) 9a and shielded from water vapor in the environment, and an open tank 2 serving as a second chamber filled with an aqueous electrolytic solution 9b and opened to water vapor in the environment. The closed tank 1 and the open tank 2 are separated from each other by an ion-permeable membrane 3. An electrode 4a and an electrode 4b are inserted into the closed tank 1 and the open tank 2 in such a way as to be in contact with the electrolytic solutions 9a and 9b, respectively. The electrode 4a and the electrode 4b are respectively connected to a wire 5a and a wire 5b for taking out electromotive force generated therebetween to the outside.

The electrolytic solution 9a and the electrolytic solution 9b are each an aqueous solution of a deliquescent ionic compound. Therefore, as a result of the open tank 2 being opened to water vapor in the environment, moisture is absorbed or discharged due to a humidity change of the outside air, and this changes the concentration of ions in the electrolytic solution 9b. In addition, for example, chloride can be suitably used as the deliquescent ionic compound. Note that the open tank 2 is shielded from the outside by, for example, a waterproof moisture-permeable membrane so as to allow transmission of water vapor to and from the outside. As a result, it is possible to prevent leakage of the electrolytic solution 9b while the open tank 2 is opened to water vapor in the environment. Note that the area of the waterproof moisture-permeable membrane being exposed to the environment is preferably larger than the area of the ion-permeable membrane 3 separating the closed tank 1 and the open tank 2, because it is possible to improve the speed of absorption of water vapor from the environment and release of water vapor into the environment.

With the above configuration, the humidity fluctuation battery 10 can generate power by changing the concentration of ions in the open tank 2 according to the fluctuation of humidity in the environment, and performing ion exchange with the closed tank 1 by use of a difference in ion concentration as driving force.

By the way, when, for example, an ion-exchange membrane that allows hydrated cations to permeate is used as the ion-permeable membrane in such a humidity fluctuation battery, electrostatic repulsion due to fixed negative charges in the membrane prevents anions from entering the membrane, and allows only cations to permeate in a selectively hydrated (solvated) state. However, since such a cation-exchange membrane contains water therein, the cation-exchange membrane has slight water permeability, and causes water to permeate in a direction in which a difference in ion concentration between the open tank and the closed tank is reduced by osmotic pressure, resulting in self-discharge. In addition, such an ion-exchange membrane that conducts hydrated cations lowers ion selectivity for an electrolytic solution having a high concentration exceeding fixed negative charge density, and also allows permeation of anions. In the case of the humidity fluctuation battery, the electrolytic solution may have such a high concentration depending on humidity, and this may lead to reduction in output power.

Therefore, in the humidity fluctuation battery 10 in the present embodiment, an electrolyte capable of conducting ions that have not been hydrated (unhydrated ions) is used as the ion-permeable membrane 3. That is, the ion-permeable membrane 3 is an ion-permeable membrane acting without intervention of water. With such an electrolyte, it is not necessary for the ion-permeable membrane 3 to contain water, and it is possible to prevent permeation of water due to osmotic pressure. Since migration of moisture in the ion-permeable membrane 3 can be prevented, it is possible to prevent a decrease in concentration difference due to self-discharge, and obtain a large electromotive force by using humidity fluctuation in the environment. In addition, the electrolyte that conducts unhydrated ions can exhibit high ion selectivity (cation transport rate) regardless of the concentration of the electrolytic solution. This action also enables the humidity fluctuation battery 10 to obtain higher voltage and higher output power than in the case of a humidity fluctuation battery using a cation-exchange membrane that conducts hydrated ions.

For example, water-resistant ion-conducting glass ceramic can be used as such an electrolyte. In particular, a LATP (Li_{1.4}Al_{0.4}Ti_{1.6}(PO₄)₃) solid electrolyte with a lithium superionic conductor (LISICON) type crystal structure having high water resistance, or the like can be suitably used as the water-resistant ion-conducting glass ceramic. This can make the ion-permeable membrane 3 chemically more stable.

In addition, the ion-permeable membrane 3 is fixed in the humidity fluctuation battery 10 such that the periphery of the ion-permeable membrane 3 is sandwiched between a lower support 6a and an upper support 6b. The lower support 6a and the upper support 6b are each preferably a composite containing an electrolyte by using a foamed material because it is possible to prevent breakage of the ion-permeable membrane 3 made of water-resistant ion-conducting glass ceramic, which is fragile, and to physically stabilize the ion-permeable membrane 3. Furthermore, the lower support 6a and the upper support 6b also serve as sealing materials for sealing the electrolytic solution 9a and the electrolytic solution 9b, respectively. For example, foamed fluororubber can be suitably used as such a foamed material.

### [Production Test]

Next, a description will be given of an example of producing the humidity fluctuation battery 10 according to the present embodiment.

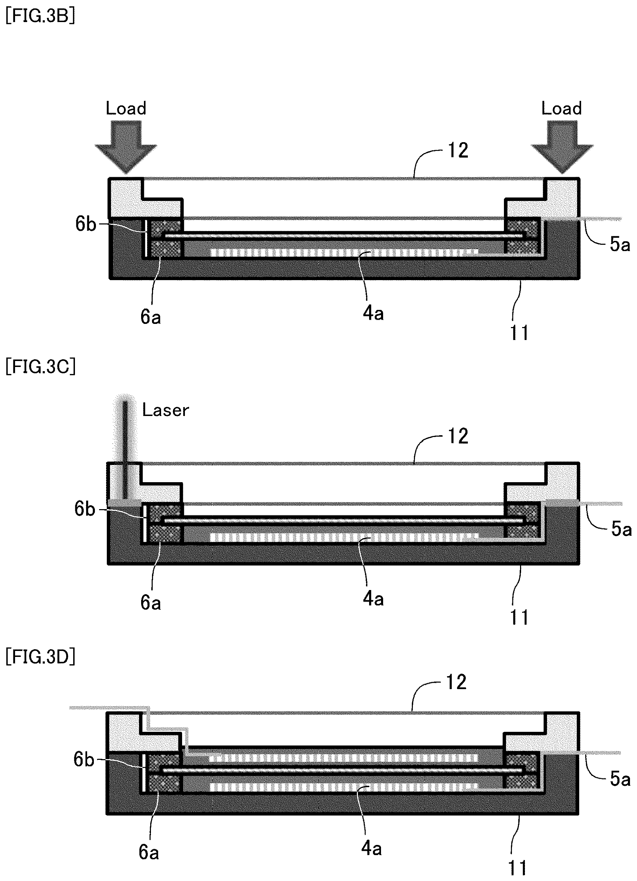

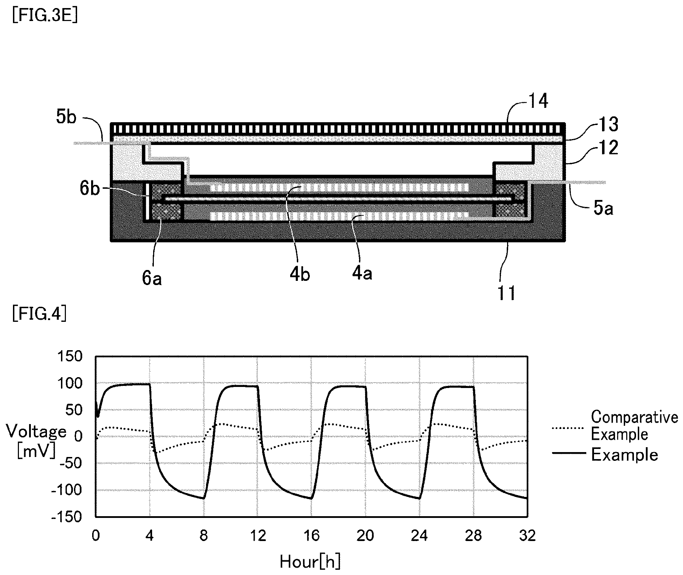

First, a method for producing the humidity fluctuation battery 10 will be described with reference to Figs. 2 and 3.

As illustrated in Fig. 2, it is possible to produce the humidity fluctuation battery 10 by stacking, in layers, a closed-tank housing 11 and an open-tank housing 12, which are made of resin as with other members, and welding the closed-tank housing 11 and the open-tank housing 12 to each other.

Referring also to Fig. 3A, first, the lower support 6a in a rectangular annular shape with a 24-by-24 mm opening was disposed inside the closed-tank housing 11 made of a black ABS resin formed as a dish-like body having a substantially rectangular recess in the center. The lower support 6a is a fluororubber sponge having a hardness of 48 (type A durometer). As the electrolytic solution 9a, 0.15 mL of a 20 wt% lithium chloride aqueous solution was poured into the opening in the lower support 6a serving as the closed tank 1, and the electrode 4a was immersed therein. The electrode 4a was obtained as follows: silver paste was printed and fired in a mesh-like shape on both surfaces of a 23-by-23 mm filter paper, and anodized in an aqueous solution containing chloride ions to cause part of silver to form silver chloride, and in addition, a silver wire with a gold-plated surface was attached thereto as the wire 5a. A 1-inch square LATP solid electrolyte membrane that is 20 µm in thickness was disposed as the ion-permeable membrane 3 in such a way as to close the opening. Furthermore, the upper support 6b having the same planar shape as the lower support 6a was disposed thereon. The upper support 6b is a fluororubber sponge having a hardness of 12 (type A durometer).

As illustrated in Fig. 3B, the open-tank housing 12 made of a transparent polymethyl methacrylate resin was disposed on the upper support 6b, and a load was applied from above. As a result, the open-tank housing 12 crushes the upper support 6b and the lower support 6a to bring the outer peripheral side of the open-tank housing 12 into contact with the closed-tank housing 11. Note that an opening equal in size to an opening in the upper support 6b is provided on the lower side of the open-tank housing 12, and an opening wider than the opening provided on the lower side is provided on the upper side of the open-tank housing 12. As a result, the area of the upper opening can be made larger than the area of the ion-permeable membrane 3 separating the closed tank 1 and the open tank 2.

As illustrated in Fig. 3C, the closed-tank housing 11 and the open-tank housing 12 were fixed by laser welding while the load was maintained. Note that this fixation may be performed by other methods, and an adhesive, a double-sided tape, hot melt, ultrasonic welding, or the like can also be used. Since the black closed-tank housing 11 is irradiated with a laser having passed through the open-tank housing 12 that is transparent, it is possible to heat a surface of the closed-tank housing 11, the surface being in contact with the open-tank housing 12, to weld the closed-tank housing 11 and the open-tank housing 12 together which are both made of thermoplastic resin. At this time, the wire 5a was taken out to the outside through between the closed-tank housing 11 and the lower support 6a and between the closed-tank housing 11 and the open-tank housing 12.

Next, as illustrated in Fig. 3D, 0.225 mL of the 20 wt% lithium chloride aqueous solution was poured as the electrolytic solution 9b into the opening on the lower side of the open-tank housing 12 serving as the open tank 2 and the opening in the upper support 6b, and the electrode 4b was immersed therein. The electrode 4b is similar to the electrode 4a.

Finally, as illustrated in Fig. 3E, a waterproof moisture-permeable membrane 13, which is made of a porous fluororesin film, and a mesh sheet 14, which is made of a PET film with honeycomb openings provided therein, were placed in such a way as to close the upper opening in the open-tank housing 12. The waterproof moisture-permeable membrane 13 and the mesh sheet 14 were attached to the open-tank housing with a double-sided tape. Note that the waterproof moisture-permeable membrane 13 can prevent leakage of the electrolytic solution 9b and intrusion of other liquids while opening the open tank 2 to water vapor in the environment. The mesh sheet 14 is provided so as to prevent intrusion of a solid material from the outside. Various plastic materials, mesh bodies made of metal materials, punched sheets, and the like can also be used as the mesh sheet. In addition, the wire 5b was taken out to the outside through between the waterproof moisture-permeable membrane 13 and the open-tank housing 12. As a result, the humidity fluctuation battery 10 could be obtained.

Next, a test for examining performance of the humidity fluctuation battery 10 thus produced has been conducted, and results thereof will be described.

Fig. 4 illustrates results of measuring open circuit voltage observed when a humidity change was applied to the humidity fluctuation battery 10 produced as an example. The humidity fluctuation battery 10 was placed in a constant temperature and humidity bath, and a humidity change was applied in such a way as to alternate between a humidity of 30% and a humidity of 90% every 4 hours. In addition, as a comparative example, a humidity fluctuation battery using a conventional cation-exchange membrane (Nafion (registered trademark) 117) instead of the ion-permeable membrane 3 was also tested in the same manner. As a result, a higher voltage was obtained in the example than in the comparative example at both the humidity of 30% and the humidity of 90%. In the comparative example, the behavior of self-discharge was observed in which voltage gradually decreased after reaching a peak, while the behavior of self-discharge was not observed in the example. That is, the humidity fluctuation battery 10, in which an electrolyte that conducts unhydrated ions is used as the ion-permeable membrane 3, can prevent a decrease in voltage due to self-discharge by preventing moisture permeation between the closed tank 1 and the open tank 2, and thus, can be used as an energy harvesting element capable of obtaining a large electromotive force for an IoT-related device and the like.

Note that the humidity fluctuation battery 10 can also be used as a humidity fluctuation detection sensor, particularly as a humidity fluctuation detection sensor that operates without power supply. Here, as also illustrated in Fig. 4, the temporal change of output voltage is moderate as compared with changes in humidity, and unlike, for example, a resistance-change type humidity sensor, it is possible to directly output the average of humidity fluctuations in the environment without performing signal processing.

Although a representative embodiment according to the present invention has been described above, the present invention is not necessarily limited thereto, and those skilled in the art will be able to find various alternative embodiments and modified examples without departing from the gist of the present invention or the appended claims.

### Reference Signs List

- 1: Closed tank (first chamber)
- 2: Open tank (second chamber)
- 3: Ion-permeable membrane
- 4a, 4b: Electrode
- 9a, 9b: Electrolytic solution
- 10: Humidity fluctuation battery

## Claims

1. A power generating element for generating power by using a humidity change due to water vapor in an environment, the power generating element comprising:
a first chamber shielded from the water vapor in the environment; and a second chamber opened to the water vapor in the environment, wherein
the first chamber and the second chamber are separated by an ion-permeable membrane, each of the first chamber and the second chamber is filled with an aqueous electrolytic solution including an aqueous solution of a deliquescent ionic compound, an electrode is provided in each of the first chamber and the second chamber, and
the ion-permeable membrane is made of an electrolyte capable of conducting ions that have not been hydrated.

2. The power generating element according to claim 1, wherein the electrolyte includes water-resistant ion-conducting glass ceramic.

3. The power generating element according to claim 2, wherein the water-resistant ion-conducting glass ceramic includes a LATP solid electrolyte having a LISICON-type crystal structure.

4. The power generating element according to claim 1, wherein periphery of the ion-permeable membrane is sandwiched between supports which are each a composite containing the electrolyte and made of a foamed material.

5. The power generating element according to claim 4, wherein the foamed material includes foamed fluororubber.

6. The power generating element according to claim 1, wherein the second chamber is shielded from the environment by a moisture-permeable membrane that transmits water vapor, and an area of the moisture-permeable membrane being exposed to the environment is larger than an area of the ion-permeable membrane separating the first chamber and the second chamber.
